# EUROPEAN PATENT SPECIFICATION

(11) **EP 2 361 677 B1**
(45) Date of publication and mention of the grant of the patent: **02.10.2013**
(21) Application number: 11154307.0
(22) Date of filing: 14.02.2011
(51) Int. Cl.: B01J 8/18, B01J 8/44, F27B 15/10

(54) **Fluidized bed without a distributor**
Wirbelbett ohne Verteiler
Lit fluidisé sans distributeur

(30) Priority: 18.02.2010 US 305821 P
(43) Date of publication of application: 31.08.2011
(73) Proprietor: Kordt, Peter, 45549 Sprockhövel (DE); Friedman, Jacob Avrum, Waterloo ON N2T 2T8 (CA)
(72) Inventor: Kordt, Peter, 45549 Sprockhövel (DE); Friedman, Jacob Avrum, Waterloo ON N2T 2T8 (CA)
(74) Representative: Kalkoff & Partner

(56) References cited:
- GB-A- 2 042 698
- PELL M: "UNDERSTANDING THE DESIGN OF FLUID-BED DISTRIBUTORS PROPER DESIGN OF THE DISTRIBUTOR WILL RESULT IN BETTER PERFORMANCE", CHEMICAL ENGINEERING, ACCESS INTELLIGENCE ASSOCIATION, ROCKVILLE, MA, US, vol. 109, no. 8, 1 August 2002 (2002-08-01), pages 72-75, XP001117025, ISSN: 0009-2460

## Description

### FIELD OF THE INVENTION

This invention relates to a fluidized bed furnace with a fluidizing chamber containing a coarse layer of unfluidizable material located beneath a fine layer of fluidizable material and no distributor to receive a premixed air/gas mixture. Preferably, the fluidized bed is a heat treating furnace.

### DESCRIPTION OF THE PRIOR ART

Fluidized beds have been used for various purposes for many years for many uses including chemical processing and treating waste. Fluidized beds have been used for heat treating wires using a mixture of air and natural gas which is ignited in the bed to provide heat. Previous designs use two types distributor. One type of distributor is a porous tile located on top of an air plenum to allow air to enter the bed and a perforated pipe sitting above the distributor feeds natural gas premixed with some air into the fluidized bed, the total air being sufficient to burn the natural gas. The perforated pipe is usually buried in a layer of coarse sand to protect the perforated pipe and the porous tile from heat generated in the hot fluidized sand above the coarse layer. It is also known to use perforated pipes or perforated metal plates as the distributor.

The porous ceramic tiles are cemented in a steel frame work using a high temperature cement, which is fairly brittle. If the tiles and the steel frame work get too hot, the cement will crack and cooling air must be circulated through the support steel. In addition, an emergency blower that will keep air flowing in case of power failure must be installed. Both of these requirements are expensive. When the natural gas is introduced above the bed through perforated pipes, many of the advantages of the porous tile distributor are lost. Lateral mixing of air and gas in a fluidized bed is fairly poor, so this design does suffer from non-uniform combustions resulting in high emissions and low combustion efficiency. The porous tiles are expensive as is their installation. When perforated pipes are used as the distributor (with no porous tiles), a large number of perforated pipes are required and the pipes are made of stainless steel and are very costly and labour-intensive to produce. Small holes are drilled in the tubing at approximately one inch spacing.

Drawn steel wires can also be heat treated using a bath of molten lead to heat the wires to the annealing or stress-relieving temperature of around six hundred to one thousand degrees Celsius (600-1000°C). The wires are submerged in the molten lead using a cast ceramic sinker while the wires are pulled through it at a fixed speed that varies with wire diameter. While this system is simple and effective, many jurisdictions have restricted or banned the use of lead due to its toxicity and environmental concerns.

### SUMMARY OF THE INVENTION

It is an object of the present invention to provide a fluidized bed that does not have a distributor and passes a fluidizing gas directly through a coarse layer of unfluidizable material located beneath a fine layer of fluidizable material.

It is an object of the present invention to provide a fluidized bed heat treating furnace that does not have a distributor and passes an air/gas mixture directly through a coarse layer of unfluidizable material located beneath a fine layer of fluidizable material.

A fluidized bed comprising:
(a) a fluidizing chamber having a fluidizing gas entrance therein;
(b) a coarse layer of refractory particles of sufficiently large size so as to remain unfluidized when the bed is operating, the coarse layer being located in the chamber above the entrance;
(c) a fine layer of refractory particles of sufficiently small size so as to be fluidized when the bed is operating, the fine layer being located immediately above the coarse layer when the bed is not operating;
(d) a fluidized zone located above the coarse layer when the bed is operating and formed by particles of the fine layer;
(e) the fluidizing gas entrance being connected to a supply of fluidizing gas mixture;
(f) a blower to cause the fluidizing gas to flow through the entrance and through the coarse layer and the fine layer without passing through a distributor at a flow rate to fluidize the fine layer but not the coarse layer; and
(g) an access to an interior of the chamber.

Preferably, the fluidized bed is a fluidized bed heat treating furnace and the fluidized bed having an igniter to ignite the fluidizing gas, which is a combustible, premixed air/gas mixture.

A method of operating a fluidized bed, said bed having a fluidizing chamber with a fluidizing gas inlet in a bottom thereof, said method comprising:
(a) locating a layer of coarse refractory particles of sufficient size so as to remain unfluidized when said bed is operating, the coarse layer being located in a bottom of the chamber above the inlet;
(b) locating a fine layer of refractory particles of a size so as to be fluidized above the coarse layer when said bed is operating, said fine layer being located immediately above said coarse layer when said bed is not operating;
(c) connecting the fluidizing gas inlet to a supply of combustible gas and to a source of air, premixing the air and gas to form a fluidizing gas that is combustible;
(d) connecting a blower to pass the fluidizing gas through the fluidizing gas inlet and through said coarse layer and said fine layer at a velocity to fluidize said fine layer, but not to fluidize said coarse layer;
(e) choosing the particles of said coarse layer so that a spacing between the particles is sufficiently small so that the combustion does not occur in the coarse layer; and
(f) operating the fluidized bed to achieve the desired result.

### BRIEF DESCRIPTION OF THE DRAWINGS

Figure 1 is a partial sectional side view of a fluidized bed heat treating furnace; and
Figure 2 is a schematic sectional front view of the fluidized bed heat treating furnace with additional features to that shown in Figure 1.

### DETAILED DESCRIPTION OF A PREFERRED EMBODIMENT

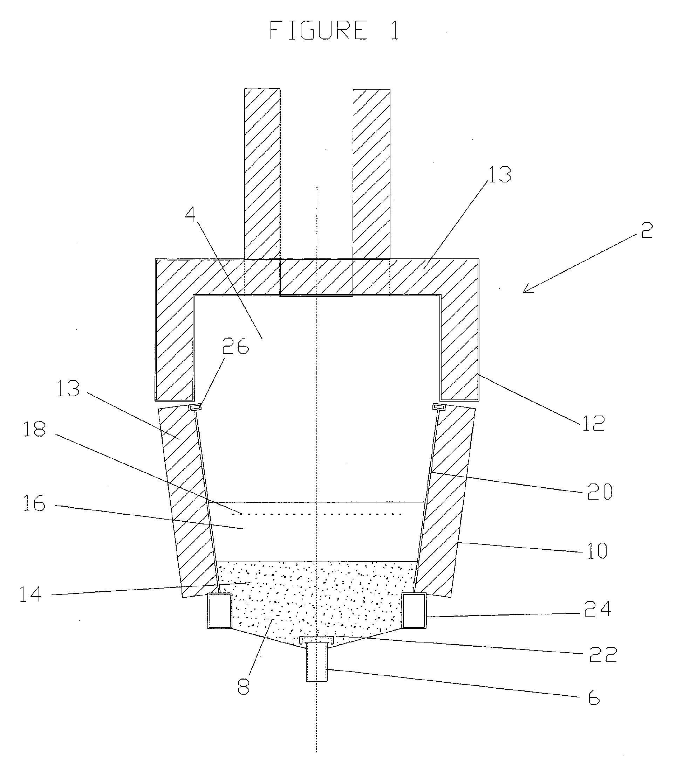

In Figure 1, a heat treating furnace 2 that is a fluidized bed has a fluidizing chamber 4 with a premixed air/gas entrance 6 located in a base 8 of the fluidizing chamber 4. The chamber 4 has side walls 10 and a removable top 12 that can be opened to provide access to the chamber 4. The side walls 10 and top 12 are preferably insulated by insulation 13. In a bottom of the chamber 4, above the premixed air/gas entrance 6 and supported by the base 8 is a coarse layer 14 of refractory particles of sufficiently large size so as to remain unfluidized when the bed 2 is operating.

A fine layer 16 of refractory particles of sufficiently small size so as to be fluidized when the bed 2 is operating is located immediately above the coarse layer 14. A plurality of wires 18 to be heat treated are mounted within the fluidizing chamber 4 at a height that is above the fine layer 16 when the bed is not operating, but is within a fluidized zone and is contacted by the particles of the fine layer 16 when the bed is fluidized. An interior surface of the side walls 10 is coated with a heat resistant material 20. The top 12 has vents to exhaust gases from a fuel/air mixture (not shown in Figure 1) that is introduced under pressure through the air/gas entrance 6. A refractory particle back flow preventer 22 is located just inside the entrance 6. Steel supports 24 support the base and smaller steel supports 26 provide longitudinal rigidity for the side walls 10.

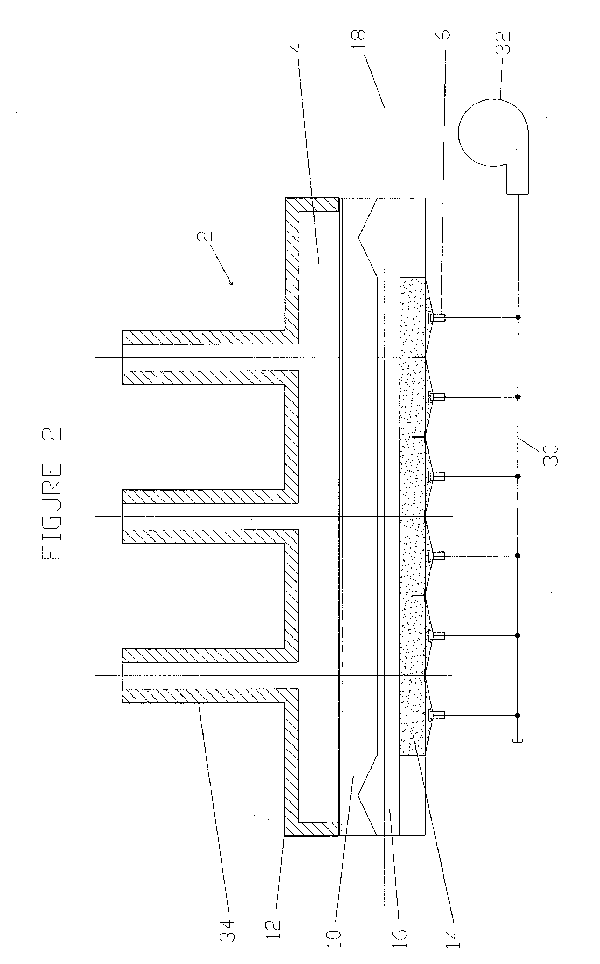

In Figure 2, the fluidized bed heat treating furnace 2 has a plurality of premixed air/gas entrances 6 connected to a manifold 30, which is in turn connected to a blower 32 to pressurize the premixed air/gas mixture (not shown) and force the mixture into the fluidizing chamber 4 at a sufficient velocity to fluidize the fine layer 16, but leave the coarse layer 14 unfluidized. The top 12 has a plurality of vents 34 therein to exhaust the spent fuel/gas mixture (not shown). The vents 34 are not shown in Figure 1. The wires 18 (only one of which is shown in Figure 2) extend outside the chamber 4 and can be fed continuously through the chamber 4 while the bed is operating to heat treat the wires. The same reference numerals are used in Figure 2 for those components that are identical in Figure 1.

Depending on the size of the fluidized bed heat treating furnace, the number of premixed air/gas inlets can range from one to several inlets to insure that the premixed air/gas mixture is evenly distributed when it exits the coarse layer 14. The furnace 2 does not have a distributor and therefore has several advantages over previous fluidized bed heat treating furnaces. In the furnace of the present invention, no cooling air is required and there is no distributor or perforated pipes or tubes. No cooling air is required and the pressure drop across the two layers 14, 16 is much lower than previous furnaces, thereby allowing for a smaller blower size for the same furnace area than prior art furnaces. This results in lower energy consumption, a higher combustion efficiency and fewer contaminants being exhausted through the vents 34 as more complete burning is achieved by the furnace of the present invention than is achieved by previous furnaces. Also, the explosion hazards that can be present with previous furnaces are eliminated by the furnace of the present invention. Further, the furnace of the present invention is much less expensive to construct and operate than previous furnaces. Maintenance of the furnaces of the present invention is much less than the maintenance costs of previous fluidized bed heat treating furnaces because no distributor is present.

The size of the particles in the coarse layer is chosen to be less than the quenching distance of the fuel. When the fuel is natural gas and air, the quenching distance is three millimetres (3mm). The spacing between the particles of the coarse layer is therefore less than three millimetres (3mm) so that no combustion will occur within the coarse layer. Combustion occurs in the fine layer, which is fluidized. Preferably, the coarse layer and fine layer are particles of sand. The coarse layer has sand particles that are sufficiently large not to be fluidized at the flow rates used to fluidized the finer sand located above the coarse layer. The air/gas mixture entering the coarse sand distributes uniformly in the lateral direction due to the low flow resistance of the coarse grit sand coupled with the increasing flow area available as radial distance from the inlet increases. By the time the air/gas mixture reaches the fine fluidizing sand, it is uniformly distributed and at an even pressure across the entire coarse grit sand layer.

Preferably, the coarse grit sand of the coarse layer is the same material as the fine fluidizing sand of the fine layer so that the coarse layer can withstand the same temperatures as the fine layer and does not need to be protected by heat in any way. While the coarse layer and fine layer preferably consist of the same material, the particles of the coarse layer, of necessity, are larger than the particles of the fine layer. It is not essential that the coarse grit sand be the same material as the fine fluidizing sand. For example, the coarse grit layer can be gravel. Experiments have shown that even with the fine fluidized sand at a thousand degrees Celsius (1000°C), the coarse grit sand one inch below the coarse/fine sand interface is below one hundred degrees Celsius (100°C) and cannot support combustion.

The heat treating furnace of the present invention can accommodate a number of wires to be heat treated (for example twenty to fifty) running in parallel approximately twenty-five to forty millimetres (25-40mm) apart. The fluidized bed of the present invention can be operated between six hundred degrees Celsius (600°C) and one thousand degrees Celsius (1000°C) and range in length from around fifteen (15) feet long to over eighty (80) feet long depending on wire speed. The bed is typically around three (3) feet wide but the width varies with the number of wires and the space in between the wires. The wires are preferably drawn through the fluidizing zone and extend through suitable openings (not shown) in end walls 36 of the chamber 4 on a continuous basis using pulleys located outside the chamber. The wires are pulled through the fluidizing chamber at a height to be within the fluidized portion of the fine layer particles when the bed is operating. Preferably, the heat resistant material 20 is a steel alloy.

## Claims

1. A fluidized bed comprising:
(a) a fluidizing chamber having a fluidizing inlet therein;
(b) a coarse layer of refractory particles of sufficiently large size so as to remain unfluidized when said bed is operating, the coarse layer being located in the chamber above the inlet;
(c) a fine layer of refractory particles of sufficiently small size so as to be fluidized when said bed is operating, said fine layer being located in the chamber immediately above said coarse layer;
(d) said particles of said fine layer being located in a fluidized zone above said coarse layer when said bed is operating;
(e) the gas inlet being connected to a supply of fluidizing gas;
(f) a blower to cause the fluidizing gas to flow through the fluidizing gas inlet and through the coarse layer and fine layer without passing through a distributor at a flow rate to fluidize the fine layer but not the coarse layer; and
(g) an access to an interior of the chamber.

2. A fluidized bed as claimed in Claim 1 wherein the fluidized bed is a heat treating furnace.

3. A fluidized bed as claimed in Claim 2 wherein the bed has an igniter to ignite the fluidized gas, which is a premixed, combustible air/gas mixture.

4. A fluidized bed as claimed in Claim 3 wherein a spacing between the particles of the coarse layer being sufficiently small to prevent combustion from occurring within the coarse layer.

5. A fluidized bed as claimed in Claim 4 wherein a size of the particles in the coarse layer is chosen to be less than the quenching distance of the air/gas mixture.

6. A fluidized bed as claimed in Claim 5 wherein the fine layer is comprised of fine particles of sand and the coarse layer is comprised of coarse particles of sand.

7. A fluidized bed as claimed in Claim 6 wherein the coarse layer is coarse grit sand.

8. A fluidized bed as claimed in Claim 7 wherein the material of the coarse layer is the same material as the material of the fine layer with a different size.

9. A fluidized bed as claimed in Claim 4 wherein the access are several aligned openings in walls of the fluidizing chamber with each pair of openings on opposing walls being sized to receive wires to be heat treated.

10. A fluidized bed heat treating furnace as claimed in Claim 2 comprising:
(a) at least one retainer to support objects to be heat treated within the fluidized zone of the chamber.

11. A method of operating a fluidized bed, said bed having a fluidizing chamber with a fluidizing gas inlet and a bottom thereof, the method comprising:
(a) locating a layer of coarse refractory particles of sufficient size so as to remain unfluidized when said bed is operating, the coarse layer being located in a bottom of the chamber above the inlet;
(b) locating a fine layer of refractory particles of a size so as to be fluidized above the coarse layer when said bed is operating, said fine layer being located immediately above said coarse layer when said bed is not operating;
(c) connecting the fluidizing gas inlet to a supply of fluidizing gas;
(d) connecting a blower to pass the fluidizing gas through the fluidizing gas inlet and through the coarse layer and the fine layer without passing through a distributor at a velocity to fluidize the fine layer but not to fluidize the coarse layer;
(e) choosing the particles of the coarse layer so that a spacing between the particles is sufficiently small that combustion does not occur in the coarse layer; and
(f) operating the fluidized bed at a temperature, flow rate and duration to achieve a desired result.

12. A method of operating a fluidized bed heat treating furnace as claimed in Claim 11 to heat objects, said furnace having a fluidizing chamber with a premixed air/gas inlet in a bottom thereof, said method comprising:
(a) connecting the premixed air/gas inlet to a supply of combustible gas and to a source of air, premixing the air and gas to form a premixed air/gas mixture that is combustible;
(b) locating objects to be heat treated within said chamber to be within said fluidizing zone when said bed is operating;
(c) connecting a blower to pass the air/gas mixture through the premixed air/gas inlet and through said coarse layer and said fine layer at a velocity to fluidize said fine layer, but not to fluidize said coarse layer;
(d) igniting the air/gas mixture as the mixture exits from said coarse layer.

13. A method as claimed in Claim 12 wherein said objects to be heat treated are passed through said access on a continuous basis.

## Patentansprüche

1. Wirbelbett, umfassend:
(a) eine Wirbelkammer, die einen Wirbeleinlass darin aufweist;
(b) eine grobe Schicht aus feuerfesten Teilchen, die groß genug sind, um nicht fluidisiert zu werden, wenn das Bett betrieben wird, wobei die grobe Schicht in der Kammer über dem Einlass angeordnet ist;
(c) eine feine Schicht aus feuerfesten Teilchen, die klein genug sind, um fluidisiert zu werden, wenn das Bett betrieben wird, wobei die feine Schicht in der Kammer unmittelbar über der groben Schicht angeordnet ist;
(d) wobei die Teilchen der feinen Schicht in einer Wirbelzone über der groben Schicht angeordnet sind, wenn das Bett betrieben wird;
(e) den Gaseinlass, der mit einer Wirbelgaszufuhr verbunden ist;
(f) ein Gebläse, um zu bewirken, dass das Wirbelgas bei einer Strömungsgeschwindigkeit zum Fluidisieren der feinen Schicht aber nicht der groben Schicht durch den Wirbelgaseinlass und durch die grobe Schicht und die feine Schicht strömt, ohne einen Verteiler zu durchqueren; und
(g) einen Zugang zu einem Innenraum der Kammer.

2. Wirbelbett nach Anspruch 1, wobei das Wirbelbett ein Wärmebehandlungsofen ist.

3. Wirbelbett nach Anspruch 2, wobei das Bett einen Zünder aufweist, um das Wirbelgas zu entzünden, das ein vorgemischtes brennbares Luft-Gas-Gemisch ist.

4. Wirbelbett nach Anspruch 3, wobei ein Zwischenraum zwischen den Teilchen der groben Schicht klein genug ist, um das Auftreten einer Verbrennung innerhalb der groben Schicht zu verhindern.

5. Wirbelbett nach Anspruch 4, wobei eine Größe der Teilchen in der groben Schicht ausgewählt ist, um kleiner zu sein als der Löschabstand des Luft-Gas-Gemischs.

6. Wirbelbett nach Anspruch 5, wobei die feine Schicht aus feinen Sandteilchen besteht und die grobe Schicht aus groben Sandteilchen besteht.

7. Wirbelbett nach Anspruch 6, wobei die grobe Schicht Sand mit grober Körnung ist.

8. Wirbelbett nach Anspruch 7, wobei das Material der groben Schicht dasselbe Material wie das Material der feinen Schicht aber mit einer unterschiedlichen Größe ist.

9. Wirbelbett nach Anspruch 4, wobei der Zugang aus mehreren fluchtenden Öffnungen in Wänden der Wirbelkammer besteht, wobei jedes Paar von Öffnungen auf gegenüberliegenden Wänden bemessen ist, um wärmezubehandelnde Drähte aufzunehmen.

10. Wirbelbett-Wärmebehandlungsofen nach Anspruch 2, der Folgendes umfasst:
(a) mindestens einen Halter zum Tragen von Gegenständen, die innerhalb der Wirbelzone der Kammer wärmezubehandeln sind.

11. Verfahren zum Betreiben eines Wirbelbetts, wobei das Bett eine Wirbelkammer mit einem Wirbelgaseinlass und mit einem Unterteil davon aufweist, wobei das Verfahren Folgendes umfasst:
(a) Anordnen einer Schicht aus groben feuerfesten Teilchen mit einer Größe, die ausreicht, um nicht fluidisiert zu werden, wenn das Bett betrieben wird, wobei die grobe Schicht in einem Unterteil der Kammer über dem Einlass angeordnet ist;
(b) Anordnen einer feinen Schicht aus feuerfesten Teilchen mit einer Größe, die derart ist, dass sie über der groben Schicht fluidisiert werden, wenn das Bett betrieben wird, wobei die feine Schicht unmittelbar über der groben Schicht angeordnet ist, wenn das Bett nicht betrieben wird;
(c) Verbinden des Wirbelgaseinlasses mit einer Wirbelgaszufuhr;
(d) Verbinden eines Gebläses, um das Wirbelgas bei einer Geschwindigkeit zum Fluidisieren der feinen Schicht aber nicht zum Fluidisieren der groben Schicht zum Durchqueren des Wirbelgaseinlasses und der groben Schicht und der feinen Schicht zu bringen, ohne einen Verteiler zu durchqueren;
(e) Auswählen der Teilchen der groben Schicht derart, dass ein Zwischenraum zwischen den Teilchen ausreichend klein ist, damit keine Verbrennung in der groben Schicht auftritt; und
(f) Betreiben des Wirbelbetts bei einer Temperatur, Strömungsgeschwindigkeit und Dauer zum Erreichen eines gewünschten Ergebnisses.

12. Verfahren zum Betreiben eines Wirbelbett-Wärmebehandlungsofens nach Anspruch 11 zum Erhitzen von Gegenständen, wobei der Ofen eine Wirbelkammer mit einem Einlass für ein vorgemischtes Luft-Gas-Gemisch in einem Unterteil davon aufweist, wobei das Verfahren Folgendes umfasst:
(a) Verbinden des Einlasses für das vorgemischte Luft-Gas-Gemisch mit einer Brenngaszufuhr und einer Luftquelle, Vormischen der Luft und des Gases zum Bilden eines vorgemischten Luft-Gas-Gemischs, das brennbar ist;
(b) Anordnen von wärmezubehandelnden Gegenständen innerhalb der Kammer, um sich innerhalb der Wirbelzone zu befinden, wenn das Bett betrieben wird;
(c) Verbinden eines Gebläses, um das Luft-Gas-Gemisch bei einer Geschwindigkeit zum Fluidisieren der feinen Schicht aber nicht zum Fluidisieren der groben Schicht zum Durchqueren des Einlasses für das vorgemischte Luft-Gas-Gemisch und durch die grobe Schicht und die feine Schicht zu bringen;
(d) Entzünden des Luft-Gas-Gemischs, wenn das Gemisch aus der groben Schicht austritt.

13. Verfahren nach Anspruch 12, wobei die wärmezubehandelnden Gegenstände den Zugang kontinuierlich durchqueren.

## Revendications

1. Lit fluidisé comprenant :
(a) une chambre de fluidisation possédant une entrée de fluidisation vers celle-ci ;
(b) une couche grossière de particules réfractaires d'une taille suffisamment grande pour demeurer non-fluidisées lorsque ledit lit est en service, la couche grossière étant située dans la chambre, au-dessus de l'entrée ;
(c) une fine couche de particules réfractaires d'une taille suffisamment petite pour être fluidisées lorsque ledit lit est en service, ladite fine couche étant située dans la chambre, immédiatement au-dessus de ladite couche grossière ;
(d) lesdites particules de ladite fine couche étant situées dans une zone fluidisée au-dessus de ladite couche grossière lorsque ledit lit est en service ;
(e) l'entrée de gaz étant reliée à une alimentation de gaz de fluidisation ;
(f) un souffleur permettant au gaz de fluidisation de s'écouler à travers l'entrée de gaz de fluidisation et à travers la couche grossière et la fine couche, sans passer à travers un distributeur, à une vitesse d'écoulement permettant de fluidiser la fine couche mais pas la couche grossière ; et
(g) un accès à un intérieur de la chambre.

2. Lit fluidisé selon la revendication 1, dans lequel le lit fluidisé est un four de traitement thermique.

3. Lit fluidisé selon la revendication 2, dans lequel le lit possède un allumeur pour allumer le gaz fluidisé, lequel est un mélange combustible air/gaz prémélangé.

4. Lit fluidisé selon la revendication 3, dans lequel un espacement entre les particules de la couche grossière est suffisamment petit pour empêcher la combustion à l'intérieur de la couche grossière.

5. Lit fluidisé selon la revendication 4, dans lequel une taille des particules dans la couche grossière est sélectionnée de manière à être inférieure à la distance d'extinction du mélange air/gaz.

6. Lit fluidisé selon la revendication 5, dans lequel la fine couche est constituée de fines particules de sable, tandis que la couche grossière est constituée de particules de sable grossières.

7. Lit fluidisé selon la revendication 6, dans lequel la couche grossière est constituée de sable de grès grossier.

8. Lit fluidisé selon la revendication 7, dans lequel le matériau de la couche grossière est le même que le matériau de la fine couche, avec une taille différente.

9. Lit fluidisé selon la revendication 4, dans lequel l'accès consiste en plusieurs ouvertures alignées dans les parois de la chambre de fluidisation, chaque paire d'ouvertures dans des parois opposées présentant une taille permettant de recevoir des fils métalliques destinés à être traités à la chaleur.

10. Four de traitement thermique de lit fluidisé selon la revendication 2, comprenant :
(a) au moins un dispositif de retenue pour supporter des objets destinés à être traités à la chaleur à l'intérieur de la zone fluidisée de la chambre.

11. Procédé pour le fonctionnement d'un lit fluidisé, ledit lit possédant une chambre de fluidisation avec une entrée de gaz de fluidisation et un fond de celle-ci, le procédé comprenant :
(a) l'application d'une couche de particules réfractaires grossières d'une taille suffisante pour demeurer non-fluidisées lorsque ledit lit est en service, la couche grossière étant située dans un fond de la chambre, au-dessus de l'entrée ;
(b) l'application d'une fine couche de particules réfractaires d'une taille leur permettant d'être fluidisées au-dessus de la couche grossière lorsque ledit lit est en service, ladite fine couche étant située immédiatement au-dessus de ladite couche grossière lorsque ledit lit n'est pas en service ;
(c) le raccordement de l'entrée de gaz de fluidisation à une alimentation de gaz de fluidisation ;
(d) le raccordement d'un souffleur pour faire passer le gaz de fluidisation à travers l'entrée de gaz de fluidisation et à travers la couche grossière et la couche fine, sans le faire passer à travers un distributeur, à une vitesse permettant de fluidiser la fine couche mais sans fluidiser la couche grossière ;
(e) la sélection des particules de la couche grossière, de manière à ce qu'un espacement entre les particules soit suffisamment petit pour empêcher la combustion dans la couche grossière ; et
(f) le fonctionnement du lit fluidisé avec une température, une vitesse d'écoulement et une durée permettant d'atteindre un résultat souhaité.

12. Procédé pour le fonctionnement d'un four de traitement thermique à lit fluidisé selon la revendication 11, pour chauffer des objets, ledit four possédant une chambre de fluidisation avec une entrée air/gaz prémélangés dans un fond de celle-ci, ledit procédé comprenant :
(a) le raccordement de l'entrée air/gaz prémélangés à une alimentation de gaz combustible et à une source d'air, le prémélangeage de l'air et du gaz pour former un mélange combustible air/gaz prémélangés ;
(b) la disposition d'objets destinés à être traités à la chaleur à l'intérieur de ladite chambre, pour les placer dans ladite zone de fluidisation lorsque ledit lit est en service ;
(c) le raccordement d'un souffleur pour faire passer le mélange air/gaz à travers l'entrée air/gaz prémélangés et à travers ladite couche grossière et ladite couche fine, à une vitesse permettant de fluidiser ladite fine couche, mais sans fluidiser ladite couche grossière ;
(d) l'allumage du mélange air/gaz pendant que le mélange sort de ladite couche grossière.

13. Procédé selon la revendication 12, dans lequel lesdits objets destinés à être traités à la chaleur passent à travers ledit accès sur une base continue.
